# EUROPÄISCHE PATENTSCHRIFT

(11) **EP 2 977 301 B1**
(45) Veröffentlichungstag und Bekanntmachung des Hinweises auf die Patenterteilung: **30.01.2019**
(21) Anmeldenummer: 15166208.7
(22) Anmeldetag: 04.05.2015
(51) Int. Cl.: B62D 55/21, B62D 55/20, B62D 55/12

(54) **KETTENGLIED FÜR EINEN RAUPENANTRIEB**
CHAIN LINK FOR A CATERPILLAR-TYPE DRIVE
MAILLON D'ENTRAÎNEMENT À CHENILLE

(30) Priorität: 25.07.2014 DE 102014011143
(43) Veröffentlichungstag der Anmeldung: 27.01.2016
(73) Patentinhaber: Liebherr-Mining Equipment Colmar SAS, 68025 Colmar cedex (FR)
(72) Erfinder: Neyer, Frédéric, 68100 Mulhouse (FR)
(74) Vertreter: Laufhütte, Dieter

(56) Entgegenhaltungen:
- EP-A1- 1 283 150
- EP-A1- 2 008 919
- WO-A1-03/004336
- DE-T2- 68 922 616
- FR-A1- 2 389 525
- US-A- 2 452 921
- US-A- 2 727 794
- US-A- 3 128 130
- US-A- 5 409 306

## Beschreibung

Die Erfindung betrifft ein Kettenglied für eine Raupenkette, wobei das Kettenglied wenigstens zwei parallel verlaufende Rollenbahnen umfasst, auf deren Laufflächen während des Raupenbetriebes wenigstens eine Laufrolle bewegbar ist.

Raupenketten umfassen eine Vielzahl an Kettengliedern, die zu einer geschlossenen Kette miteinander gelenkig verbunden sind. Die Kette umschließt das Laufwerk des Raupenantriebes und dient der Fortbewegung des Fahrzeuges. Durch die Raupe wird die Aufstandsfläche der Maschine vergrößert, um einerseits die Traktion zu verbessern und andererseits das Maschinengewicht flächig auf den Untergrund zu verteilen.

Der Raupenantrieb besteht in der Regel aus wenigstens einem angetriebenen Turasrad, wenigstens einem Umlenkrad sowie einer Vielzahl an Trag- und Laufrollen, auf denen die Kette läuft. Turasrad und Umlenkrad sind in Fahrtrichtung vorne und hinten montiert, die Laufrollen sind dazwischen entlang der Aufstandsfläche angeordnet und die Tragrollen sind den Laufrollen gegenüberliegend im Bereich der zurücklaufenden Kette gelagert. Das Turasrad wird durch einen geeigneten Antrieb angetrieben, der am Unterwagen der Arbeitsmaschine befestigt ist. Das AntriebsTurasrad greift dabei in die einzelnen Kettenglieder der Raupenkette ein und ermöglicht dadurch die Fortbewegung der Arbeitsmaschine. Das Umlenkrad, auch als Leitrad bezeichnet, ist üblicherweise verlagerbar am Unterwagen befestigt und sorgt dadurch für die notwendige Kettenspannung.

Die einzelnen Laufrollen dienen dazu, die Last des Fahrzeugs auf die resultierende Aufstandsfläche der Raupenkette zu verteilen. Die Kontaktfläche zwischen den Laufrollen und den innen liegenden Flächen der einzelnen Kettenglieder wird als Rollenbahn bezeichnet. Es existieren Varianten mit ein oder mehreren Rollenbahnen, wobei die zweite Variante vorsieht, dass jedes Kettenglied zwei oder mehr parallel verlaufende Rollenbahnen aufweist, auf denen separate Felgen eines einzelnen Laufrades laufen.

Die Kettenglieder sind miteinander durch Verbindungsmittel gelenkig verbunden, was jedoch nachteilig einen Spalt zwischen den Rollenbahnen benachbarter Kettenglieder bedingt. Während der Fortbewegung müssen die Laufrollen des Raupenantriebes die Spalte benachbarter Kettenglieder überschreiten, was zu Stößen und Spitzen des Anpressdruckes führt. Dies wirkt sich nachteilig auf die Höhe des angreifenden Stressmomentes an den Kettengliedern aus und führt zu erhöhtem Verschleiß, was generell die Lebensdauer der einzelnen Komponenten des Raupenantriebes verkürzt.

Lösungsansätze sind exemplarisch aus der US 5,409,306 A sowie der EP 2 008 919 und der EP1 283 150 A bekannt. Die darin offenbarten Kettenglieder umfassen zwei Rollenbahnen, die an ihren Außenkanten zweigeteilt sind, um eine über Kreuz verlaufende Verbindung zwischen den einzelnen Rollenbahnen der Kettenglieder zu ermöglichen. Diese Vorgehensweise ermöglicht zwar einen sanfteren Übergang über die Schnittstellen benachbarter Kettenglieder, jedoch wurde bei derartigen Lösungen entdeckt, dass die einzelnen Kettenglieder an den Kreuzungsstellen erhöhte Verschleißerscheinungen zeigen.

Die Aufgabe der vorliegenden Erfindung beschäftigt sich nun mit einem alternativen Lösungsansatz, der zum einen einen sanfteren Übergang zwischen den einzelnen Kettengliedern einer Raupenkette ermöglicht und sich zudem durch geringere Verschleißerscheinungen und damit höhere Laufzeiten auszeichnet.

Gelöst wird diese Aufgabe durch ein Kettenglied gemäß den Merkmalen des Anspruchs 1. Vorteilhafte Ausgestaltungen des Kettenglieds sind Gegenstand der sich an den Hauptanspruch anschließenden Unteransprüche 2 bis 11.

Erfindungsgemäß wird ausgehend von einem gattungsgemäßen Kettenglied dieses dahingehend modifiziert, dass die Laufflächen der wenigstens zwei Rollenbahnen asymmetrisch geformt sind.

Als Rollenbahnen sind die innen liegenden Flächen des Kettengliedes, d.h. die den Raupenantriebskomponenten zugewandten Flächen des Kettengliedes zu verstehen, die mit den montierten Laufrollen in Kontakt treten. Die mit den Felgen der Laufrollen kontaktierenden Flächen werden im Folgenden als Laufflächen bezeichnet. Diese verlaufen in Laufrichtung des Kettenantriebes vorzugsweise parallel zueinander. Bisher waren die Laufflächen der parallel verlaufenden Rollenbahnen symmetrisch ausgeführt. Eine Abkehr von der Symmetrie ermöglicht es in einfacher Art und Weise, dass die gebildeten Spalte zwischen benachbarter Kettenglieder entweder in Laufrichtung versetzt zueinander liegen, zumindest jedoch nicht identisch zueinander sind, sodass durch geeignete Modifikation der Laufflächen kleinere Stressmomente beim Überschreiten durch die Laufrollen auftreten.

Es ist zudem vorgesehen, dass die Laufflächen der wenigstens zwei Rollenbahnen unterschiedliche Lauflängen aufweisen. Hierdurch sind die resultierenden Spalte der wenigstens zwei parallel verlaufenden Rollenbahnen benachbarter Kettenglieder in Laufrichtung versetzt zueinander, sodass diese zu unterschiedlichen Zeitpunkten von den Laufrollen passiert werden. Dadurch kontaktiert das Laufrad beim Überschreiten eines Spaltes zumindest eine weitere Lauffläche, wodurch das resultierende Stressmoment für die beanspruchten Komponenten reduziert wird.

Es ist weiterhin vorgesehen, dass die Asymmetrie der wenigstens zwei Laufflächen parallel verlaufender Rollenbahnen dazu führt, dass sich die Laufflächen in Richtung der Längsachse zumindest abschnittsweise durch unterschiedliche Querabmessungen voneinander unterscheiden.

In einer besonders bevorzugten Ausgestaltung der Erfindung bilden die Laufenden der Rollenbahnen in Laufrichtung die äußere Kanten des Kettengliedes, sodass die Rollenbahnen benachbarter Kettenglieder unmittelbar daran anschließen können, wodurch nur ein sehr geringes Spaltmaß zwischen benachbarten Kettengliedern entsteht.

In einer besonders bevorzugten Ausgestaltung ist vorgesehen, dass sich die Lauffläche wenigstens einer Rollenbahn von dem in Laufrichtung vorderen äußersten Ende bis zum hinteren äußersten Ende des Kettengliedes erstreckt, während die wenigstens eine zweite Lauffläche eine kürzere Lauflänge aufweist.

Die Kettenglieder weisen vorzugsweise an ihrem in Laufrichtung gesehenen vorderen und hinteren Ende entsprechende Verbindungsmittel auf, um mit benachbarten Kettengliedern eine gelenkige Verbindung einzugehen.

Als vorteilhafte Ausgestaltungen der Lauffläche bieten sich eine viereckförmige, insbesondere rechteck- oder quadratförmige Laufflächengeometrie an. Die Laufflächen benachbarter Rollenbahnen können sich insbesondere in der Längsabmessung und / oder Querabmessung unterscheiden. Denkbar ist beispielsweise ein Ausführungsbeispiel, wonach das Kettenglied eine erste rechteckförmige Lauffläche umfasst, die sich von dem in Laufrichtung gesehen vorderen äußersten Ende des Kettengliedes bis zum in Laufrichtung gesehen hinteren äußersten Ende des Kettengliedes erstreckt, und eine zweite parallel verlaufende Lauffläche vorgesehen ist, die sich durch eine deutlich geringere Längsabmessung gegenüber der ersten Lauffläche auszeichnet, wobei die zweite Lauffläche rechteckförmig oder alternativ quadratisch ausgeführt ist.

In einer alternativen Ausgestaltung der vorliegenden Erfindung können die Laufflächen der wenigstens zwei Rollenbahnen eine T-Form bilden, deren Querbalken in Laufrichtung orientiert sind. Die Längsbalken der jeweiligen T-Form erstrecken sich quer zur Laufrichtung, wobei diese vorzugsweise in eine gemeinsame Richtung zeigen, sodass der Querbalken einer ersten Lauffläche zur Mitte des Kettengliedes zeigt und der Querbalken der zweiten Lauffläche nach außen gerichtet ist.

Denkbar ist es ebenfalls, dass die Laufflächen der wenigstens zwei Rollenbahnen H-förmig und kreuzförmig ausgebildet sind.

Die Aufgabe lässt sich zudem durch ein Kettenglied für eine Raupenkette gemäß den Merkmalen des Anspruchs 9 lösen. Demnach umfasst das Kettenglied wenigstens zwei parallel verlaufende Rollenbahnen, auf deren Laufflächen während des Raupenbetriebes wenigstens eine Laufrolle bewegbar ist. Erfindungsgemäß unterscheiden sich die Lauflächen an ihrem in Längsrichtung gesehenen vorderen und/oder hinteren Ende hinsichtlich ihrer Breite voneinander. Dadurch liegen die resultierenden Spalte nach dem Zusammensetzen der Kette zwar nicht versetzt zueinander, jedoch werden dadurch unterschiedliche Spaltmaße quer zur Laufrichtung erreicht und die auftretenden Stressmomente lassen sich effektiv reduzieren.

Besonders bevorzugt sind die Laufflächen gabelförmig ausgebildet und zueinander punktsymmetrisch ausgerichtet. Bei den zusammengesetzten Kettengliedern greift der Stiel der Gabelform in die Gabelöffnung des benachbarten Kettengliedes.

Die vorliegende Erfindung betrifft zudem eine Kette für einen Raupenantrieb bestehend aus mindestens zwei Kettengliedern gemäß der vorliegenden Erfindung. Die Kette umfasst demnach dieselben Vorteile und Eigenschaften wie ein einzelnes Kettenglied, weshalb auf eine wiederholende Beschreibung verzichtet werden soll. In einer bevorzugten Ausgestaltung der Erfindung sind die einzelnen Kettenglieder der erfindungsgemäßen Kette zumindest großteils identisch ausgebildet, wobei benachbarte Kettenglieder um 180° gedreht zueinander montiert sind. Dadurch wird erreicht, dass die asymmetrischen Laufflächengeometrien der einzelnen Kettenglieder alternierend in Laufrichtung vorliegen. Dadurch werden die vorbeschriebenen Vorteile besonderes effektiv und einfach erreicht, d. h. die Kette zeichnet sich durch deutlich geringere Verschleißerscheinungen aufgrund stressfreier Übergänge der Laufräder entlang der Rollenbahnen der Kette aus.

Zuletzt betrifft die vorliegende Erfindung eine Arbeitsmaschine, insbesondere eine Erdbewegungsmaschine oder einen Raupenkran, mit wenigstens zwei Raupenantrieben, die mit Kettengliedern gemäß der vorliegenden Erfindung bestückt sind. Die Arbeitsmaschine zeichnet sich demnach durch dieselben Vorteile und Eigenschaften bezüglich des erfindungsgemäßen Kettengliedes aus, weshalb auch an dieser Stelle der Einfachheit halber auf eine wiederholende Beschreibung verzichtet wird.

Weitere Vorteile und Eigenschaften der Erfindung sollen im Folgenden anhand der in den Figuren dargestellten Ausführungsbeispiele näher erläutert werden. Es zeigen:
- Fig. 1:: eine Seitendarstellung des erfindungsgemäßen Raupenantriebs für eine Arbeitsmaschine,
- Fig. 2:: einen Querschnitt durch die Kombination aus Kettenglied und Laufrolle,
- Fig. 3:: zwei isometrische Darstellungen des erfindungsgemäßen Kettengliedes gemäß einer ersten Ausführungsvariante,
- Fig. 4:: eine Draufsicht auf das erfindungsgemäße Kettenglied gemäß Fig. 3,
- Fig. 5:: ein Teilausschnitt einer aus den erfindungsgemäßen Kettengliedern zusammengesetzten Raupenkette aus unterschiedlichen Betrachtungsrichtungen,
- Fig. 6:: eine Draufsicht auf den erfindungsgemäßen Raupenkettenabschnitt und
- Fig. 7:: weitere unterschiedliche Ausführungsformen eines Raupenkettenabschnittes.

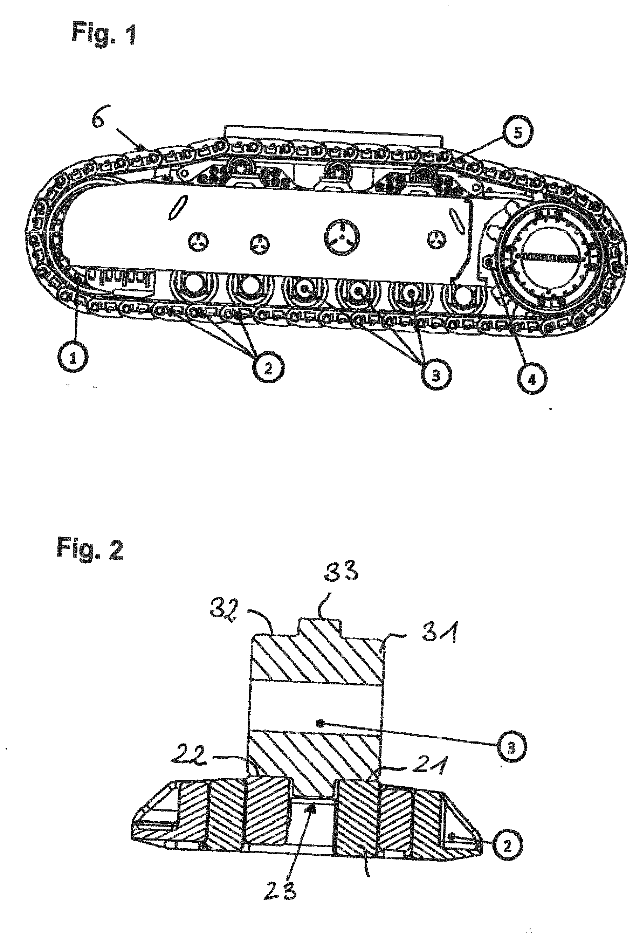

Fig. 1 zeigt eine Seitenansicht des erfindungsgemäßen Raupenantriebes für eine Erdbewegungsmaschine bzw. einen Raupenkran. Der gezeigte Raupenantrieb ist dabei am Unterwagen der entsprechenden Arbeitsmaschine befestigt und dient zur Fortbewegung der Maschine.

Der Raupenantrieb umfasst ein angetriebenes Turasrad 4, das über einen am Unterwagen montierten und geeigneten Antrieb zur Fortbewegung angetrieben wird.

Am in der Darstellung linken Ende des Raupenantriebs befindet sich das Leitrad 1, über deren Umfang die Raupenkette 6 läuft. Das Leitrad 1 sorgt für eine ausreichende Spannung der Kette 6, was durch die bewegliche Lagerung des Leitrads am Unterwagen erreicht wird. Die Raupenkette 6 läuft auf den an der Oberkante des Oberwagens montierten Tragrollen 5, um die Kette 6 ausreichend zu stützen und ein Durchhängen zu vermeiden.

In Bodennähe entlang der Aufstandsfläche sind insgesamt sechs Laufrollen 3 vorgesehen, um das Maschinengewicht bzw. den Anpressdruck gleichmäßig über die Aufstandsfläche in den Boden einzuleiten. Im gezeigten Ausführungsbeispiel sind die Laufrollen 3 gleichmäßig beabstandet zwischen dem Turasrad 4 und dem Leitrad 1 befestigt, Abweichung in der Anzahl als auch bezüglich des Abstandes der Laufrollen 3 zueinander sind ohne weiteres denkbar.

Die Raupenkette 6 setzt sich aus einzelnen Kettengliedern 2 zusammen, die über Bolzenverbindungen gelenkig miteinander verbolzt werden. Fig. 2 zeigt einen Querschnitt durch ein einzelnes Kettenglied 2 der Raupenkette 6 und die das Kettenglied im Aufstandsbereich kontaktierende Laufrolle 3.

Erkennbar sind zwei separate Lauffelgen 31, 32 der Laufrolle 3 mit gleichem Durchmesser und identischer Felgenbreite. Beide Lauffelgen 31, 32 laufen bei der Fahrzeugfortbewegung über die Innenseite der einzelnen Kettenglieder 2, werden also von einer definierten Lauffläche 21, 22 auf der Innenseite der Kettenglieder 2 getragen. Zwischen beiden Lauffelgen 31, 32 existiert ein Führungsrad 33 mit gegenüber den Felgen 31, 32 vergrößertem Durchmesser, dass in der zwischen den Laufflächen 21, 22 gezeigten Ausnehmung 23 des Kettengliedes 2 entweder frei oder ohne durchgängigem Kontakt zum Kettenglied 2 verläuft. Die Seitenwände der Laufflächen 21, 22 sorgen für eine ausreichende Führung der Laufrolle 3 auf dem Kettenglied.

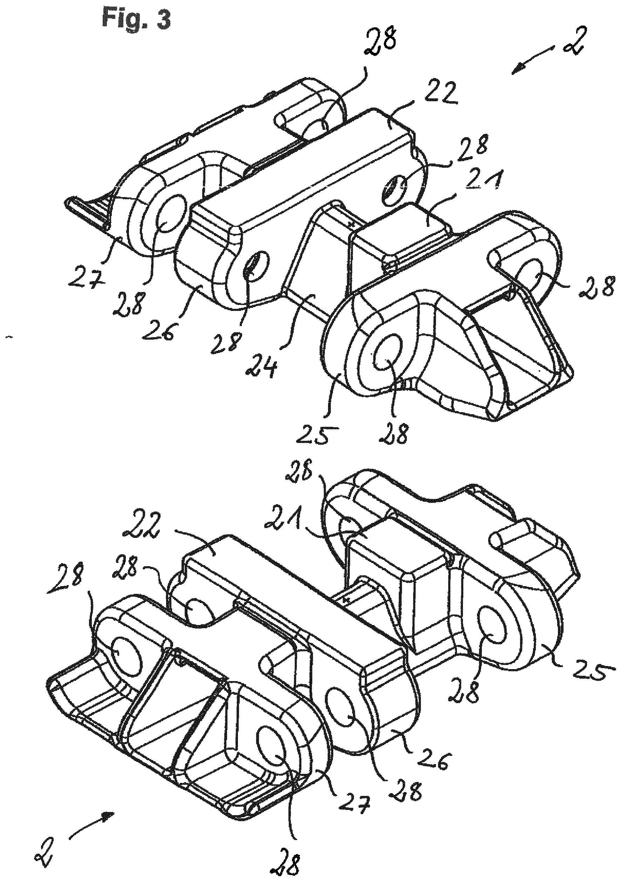

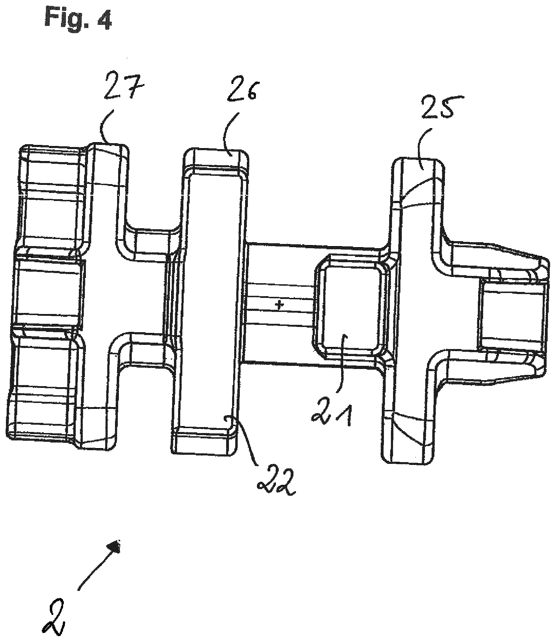

Zur Verdeutlichung der erfindungsgemäßen Idee, die hinter der Konstruktion der Kettenglieder 2 steckt, wird auf die Darstellungen der Fig. 3, die zwei isometrische Darstellungen des erfindungsgemäßen Kettengliedes 2 wiedergibt, sowie die Draufsicht der Fig. 4 verwiesen. Jedes Kettenglied 2 ist üblicherweise als einzelnes Gussteil gefertigt, dessen Form durch einen als Zahn wirkenden Querbalken bzw. Steg 24 quer zur Fahrtrichtung und drei zueinander parallel in Fahrtrichtung verlaufender Längsstege 25, 26 und 27 beschrieben werden kann. Die Stege 25, 26 und 27 weisen vorne und hinten Augen 28 zur Bolzenaufnahme auf.

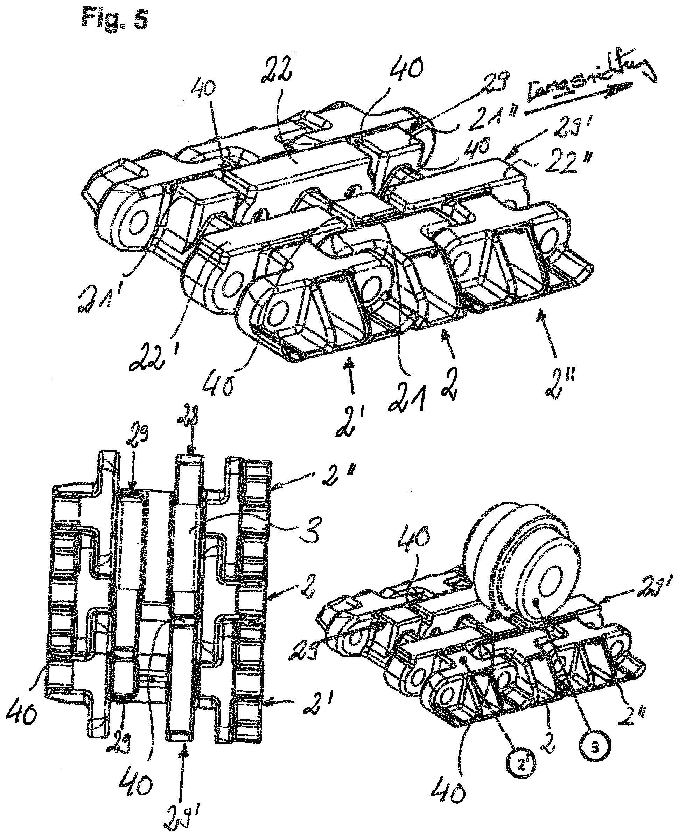

Der Abstand zwischen den Stegen 25, 26 und 27 bzw. den Augen 28 ist dabei so gewählt, dass ein um 180° gedrehtes identisches Kettenglied 2' mit dem Kettenglied 2 gelenkig verbunden werden kann, indem ein Bolzen durch die überlappend angeordneten Augen 28, 28' der Kettenglieder 2, 2' gesteckt werden kann. Der Abstand zwischen den Stege 26, 27 ist dabei kleiner gewählt als der Abstand zwischen den Stegen 25 und 26. Der Freiraum zwischen den Stegen 25, 26 und 27 bietet ausreichend Platz, um die Vorderkanten der Stege 25', 26' und 27' aufzunehmen und einen quer zur Fahrtrichtung verlaufenden Bolzen (nicht dargestellt) durch die nebeneinander angeordneten Augen 25, 25' zu stecken. Eine Darstellung von insgesamt drei gelenkig miteinander verbundenen Kettengliedern 2, 2', 2" ist der Fig. 5 zu entnehmen.

Der mittige Steg 26 weist eine flache, durchgängige Lauffläche 22 auf, die eine erste Rollenbahn der Raupenkette 6 bildet. Das Höhenniveau der Lauffläche 22 ist gegenüber den Oberflächen der Stege 25, 27 sowie des Querbalkens 24 erhöht. Innenliegend neben dem äußeren Steg 25 ist zudem ein quaderförmiger Körper auf dem Querbalken 24 ausgeformt, dessen Oberfläche die zweite Lauffläche 21 bildet und die dasselbe Höhenniveau wie die Lauffläche 22 erreicht.

Die Lauffläche 21 ist jedoch in Laufrichtung gesehen gegenüber der Lauffläche 22 verkürzt, d. h. diese zeichnet sich durch eine geringere Laufflächenlänge aus. Beide Laufflächen 21, 22 sind rechteckförmig. Zwischen den beiden Laufflächen 21, 22 ist die Oberfläche des Querbalkens 24 vertieft, um ausreichend Platz für das mittige Führungsrad 33 der Laufrolle 3 zu schaffen. An der Unterseite der Kettenglieder 2 lassen sich zudem Bodenplatten montieren.

Aufgrund der vorstehend beschriebenen Konstruktion ergibt sich eine asymmetrische Form des einzelnen Kettengliedes 2, insbesondere sind die beiden Laufflächen 21, 22 asymmetrisch. Die Vorteile dieser Konstruktion lassen sich nachvollziehbar anhand der Fig. 5 erläutern. Die insgesamt drei zusammengesetzten Kettenglieder 2, 2', 2" sind miteinander gelenkig über die Bolzenverbindungen verbunden. Dabei ist ebenfalls ersichtlich, dass das mittige Kettenglied 2 gegenüber den benachbarten Kettengliedern 2' und 2" um 180° gedreht montiert ist. Die sich durch die Zusammensetzung ergebenden Rollenbahnen 29, 29' zeichnen sich dadurch aus, dass die aufgrund der gelenkigen Verbindungen entstehenden Spalte 40 zwischen den Laufflächen 21, 21', 21", 22, 22', 22" der einzelnen Kettenglieder 2, 2', 2" in Längsrichtung zwischen den parallel verlaufenden Rollenbahnen 29, 29' versetzt zueinander sind. Dies hat zur Folge, dass die Laufrolle 3 beim Entlanglaufen auf den Rollenbahnen 29, 29' beim Überschreiten eines Spaltes 40 stets von der parallel verlaufenden Rollenbahn 29 vollständig getragen wird. Die Laufrolle 3 überschreitet niemals gleichzeitig einen Spaltübergang 40 beider Rollenbahnen 29, 29'. Durch diese Maßnahme ergeben sich nicht nur ruhigere Laufeigenschaften des Raupenantriebes, sondern es tritt zudem weniger Verschleiß an den Laufrollen 3 bzw. den Kettengliedern 2 auf.

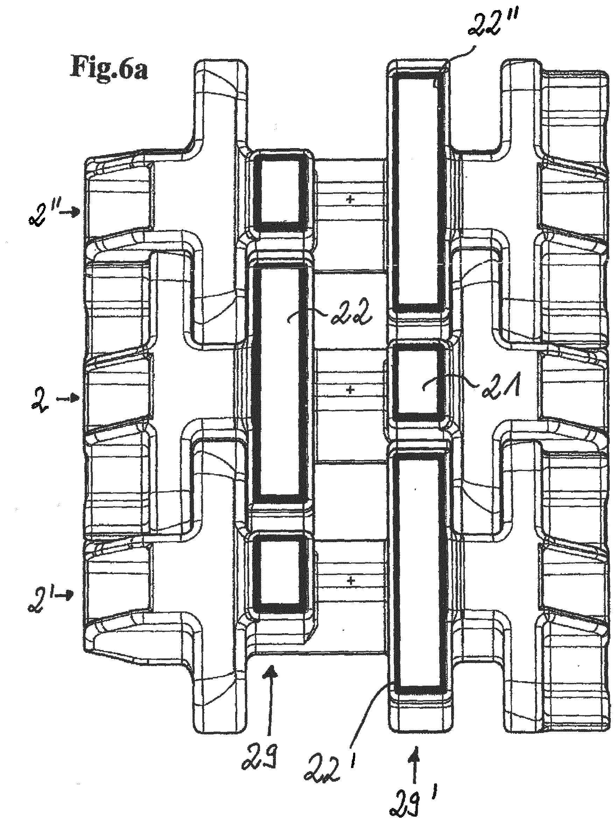

Fig. 6a zeigt eine Draufsicht auf die zusammengesetzten Kettenglieder 2, 2' und 2", wobei hier zur einfacheren Nachvollziehbarkeit die resultierenden Rollenbahnen 29, 29' durch schwarze Balken eingezeichnet wurden. Damit ist eindeutig erkennbar, dass sich jede Rollenbahn 29, 29' der Raupenkette 20 alternierend durch kurze und lange Laufflächen 21, 22', 22" bzw. 22, 21', 21" zusammensetzt.

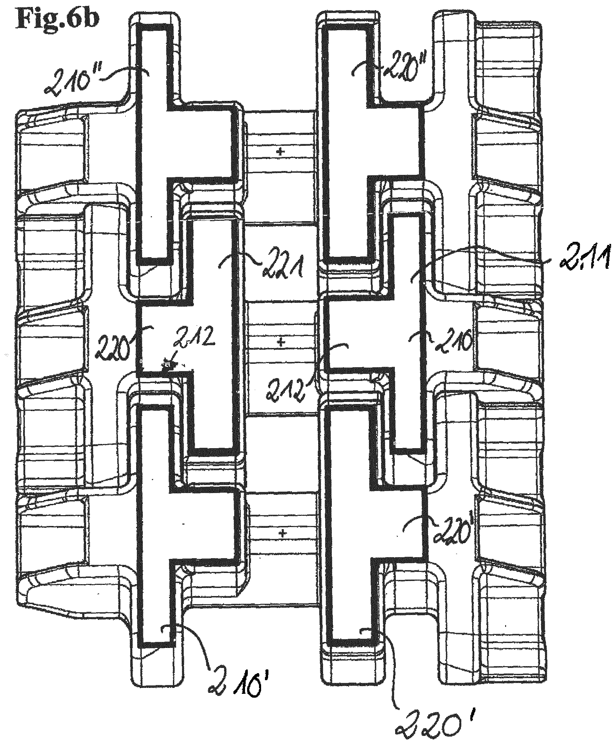

Fig. 6b zeigt eine alternative Ausgestaltung des erfindungsgemäßen Kettengliedes 2 bzw. der Laufrolle 3. In diesem Ausführungsbeispiel dienen nicht nur die Laufflächen 21, 22 zur Ausprägung der Rollenbahn 29, 29', sondern zumindest ein Teil der Stege 25, 27 weist ebenfalls eine Oberfläche mit angepasstem Höhenniveau auf, sodass die resultierenden Laufflächen 210, 220 entsprechend vergrößert werden. Im Ausführungsbeispiel der Fig. 6b stellt sich hierbei beispielsweise eine T-förmige Lauffläche 210, 220 ein, wobei sich die beiden Laufflächen 210, 220 in der Stärke des Querbalkens 211,221 und in der Länge des Längsbalkens 212, 222 der T-Form unterscheiden.

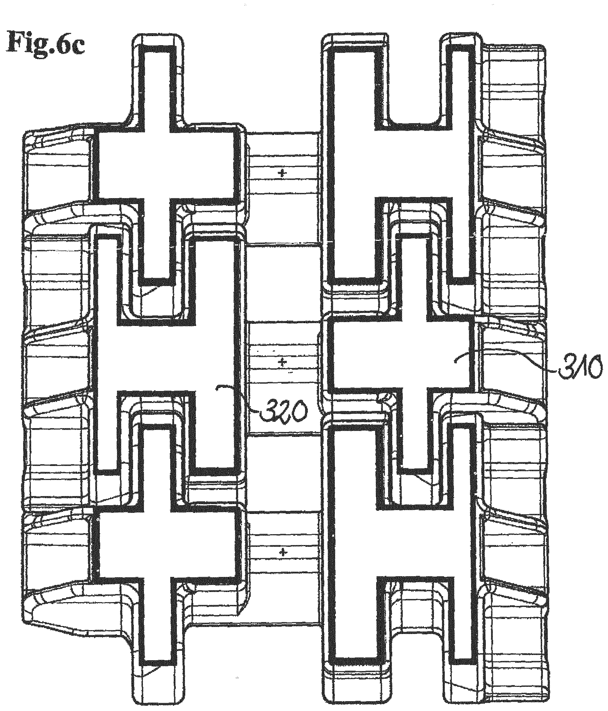

In dem gezeigten Ausführungsbeispiel der Fig. 6c wird demgegenüber die vollständige Oberfläche der Stege 25 und 27 zusätzlich als Lauffläche genutzt. Dadurch erhält eine erste Lauffläche 310 eine Kreuzform, während die zweite Lauffläche 320 eine H-Form bildet. Auch in diesem Beispiel gilt jedoch, dass die Laufflächen 310, 320 eines einzelnen Kettengliedes asymmetrisch ausgebildet sind. Beide Ausführungsbeispiele 6b, 6c kennzeichnen sich durch dieselben Vorteile und Eigenschaften, bieten jedoch eine erhöhte Stabilität aufgrund der verbreiterten Laufflächen.

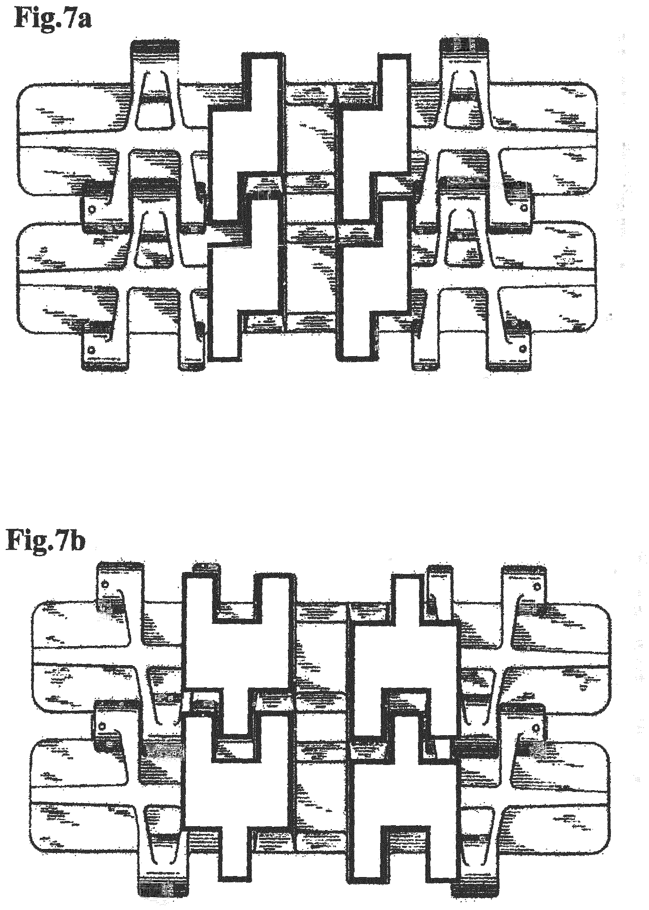

Alternativ soll auf das Ausführungsbeispiele der Fig. 7a verwiesen werden, das ebenfalls unterschiedliche Laufflächenformen darstellt. Hier wird beispielsweise eine Z-förmige Laufflächenform vorgeschlagen, wobei die parallel verlaufenden Laufflächen eines einzelnen Kettengliedes punktsymmetrisch zueinander liegen und sich die Lauflächen an ihrem in Längsrichtung gesehenen vorderen und/oder hinteren Ende hinsichtlich ihrer Breite voneinander unterscheiden.

Ein weiteres Ausführungsbeispiel, dass dem Aspekt der Figur 7a folgt, ist in Fig. 7b wiedergegeben. Ersichtlich ist eine etwa gabelförmige Laufflächenform pro Rollenbahn, wobei die Laufflächen eines Kettengliedes punktsymmetrisch um 180° gedreht zueinander angeordnet sind. Auch hier unterscheiden sich die sich die Lauflächen an ihrem in Längsrichtung gesehenen vorderen und/oder hinteren Ende hinsichtlich ihrer Breite voneinander.

## Patentansprüche

1. Kettenglied (2, 2', 2") für eine Raupenkette (6), wobei das Kettenglied (2) wenigstens zwei parallel verlaufende Rollenbahnen (29, 29') umfasst, auf deren Laufflächen (21, 22; 21', 22'; 210, 220; 310, 320) während des Raupenbetriebes wenigstens eine Laufrolle (3) bewegbar ist,
wobei die Laufflächen (21, 22; 21', 22'; 210, 220; 310, 320) der wenigstens zwei Rollenbahnen (29, 29') asymmetrisch sind, **dadurch gekennzeichnet, dass** die Laufflächen (21, 22; 21', 22'; 210, 220; 310, 320) der wenigstens zwei Rollenbahnen (29, 29') unterschiedliche Lauflängen aufweisen, und dass sich die Laufflächen (21, 22; 21', 22'; 210, 220; 310, 320) der wenigstens zwei Rollenbahnen (29, 29') entlang der Laufrichtung zumindest abschnittsweise durch unterschiedliche Querabmessungen unterscheiden.

2. Kettenglied (2, 2', 2") nach einem der vorhergehenden Ansprüche, **dadurch gekennzeichnet, dass** sich die Lauffläche (21, 22; 21', 22'; 210, 220; 310, 320) wenigstens einer Rollenbahn von dem in Laufrichtung vorderen äußersten Ende bis zum hinteren äußersten Ende des Kettengliedes (2, 2', 2") erstreckt.

3. Kettenglied (2, 2', 2") nach einem der vorhergehenden Ansprüche, **dadurch gekennzeichnet, dass** das Kettenglied (2, 2', 2") an seinem in Laufrichtung gesehenen vorderen und hinteren Ende ein oder mehrere Verbindungsmittel zur gelenkigen, insbesondere lösbaren Verbindung mit einem weiteren Kettenglied (2, 2', 2") umfasst.

4. Kettenglied (2, 2', 2") nach einem der vorhergehenden Ansprüche, **dadurch gekennzeichnet, dass** ein oder mehrere Lauflächen (21, 22; 21', 22'; 210, 220; 310, 320) viereckförmig, insbesondere rechteck- oder quadratförmig sind, wobei sich die wenigstens zwei Laufflächen (21, 22; 21', 22'; 210, 220; 310, 320) in der Länge der Längsseite unterscheiden.

5. Kettenglied (2, 2', 2") nach einem der Ansprüche 1 bis 4, **dadurch gekennzeichnet, dass** die Laufflächen (210, 220) der wenigstens zwei Rollenbahnen (29, 29') eine T-Form bilden, deren Querbalken sich in Laufrichtung und deren Längsbalken sich in eine gemeinsame Richtung quer zur Laufrichtung erstrecken.

6. Kettenglied (2, 2', 2") nach einem der Ansprüche 1 bis 4, **dadurch gekennzeichnet, dass** wenigstens eine Lauffläche (320) der wenigstens zwei Rollenbahnen (29, 29') eine H-Form und wenigstens eine Lauffläche (310) eine Kreuzform bildet.

7. Kettenglied (2, 2', 2") für eine Raupenkette (6), wobei das Kettenglied (2, 2', 2") wenigstens zwei parallel verlaufende Rollenbahnen (29, 29') umfasst, auf deren Laufflächen (21, 22; 21', 22'; 210, 220; 310, 320) während des Raupenbetriebes wenigstens eine Laufrolle (3) bewegbar ist,
**dadurch gekennzeichnet,**
**dass** sich die Lauflächen (21, 22; 21', 22'; 210, 220; 310, 320) an ihrem in Längrichtung gesehenen vorderen und/oder hinteren Ende hinsichtlich ihrer Breite voneinander unterscheiden.

8. Kettenglied (2, 2', 2") nach Anspruch 7, **dadurch gekennzeichnet, dass** die Laufflächen gabelförmig ausgebildet sind und zueinander punktsymmetrisch ausgerichtet sind.

9. Kette (6) für einen Raupenantrieb bestehend aus mindestens zwei Kettengliedern (2, 2', 2") nach einem der vorhergehenden Ansprüche.

10. Kette (6) nach Anspruch 9, **dadurch gekennzeichnet, dass** die Kettenglieder (2, 2', 2") zumindest großteils identisch sind und benachbarte Kettenglieder (2, 2', 2") um eine vertikal zur Laufrichtung stehende Achse um 180° verdreht zueinander montiert sind.

11. Arbeitsmaschine, insbesondere Erdbewegungsmaschine oder Raupenkran, mit wenigstens zwei Raupenantrieben, die mit Kettengliedern (2, 2', 2") gemäß einem der Ansprüche 1 bis 9 ausgestattet sind.

## Claims

1. Chain link (2, 2', 2") for a crawler chain (6), wherein the chain link (2) comprises at least two roller tracks (29, 29') extending in parallel, on whose running surfaces (21, 22; 21', 22'; 210, 220, 310, 320) at least one track roller (3) is movable during operation of the crawler,
wherein the running surfaces (21, 22; 21', 22'; 210, 310, 320) of the at least two roller tracks (29, 29') are asymmetric, **characterized in that** the running surfaces (21, 22; 21', 22', 210, 220; 310, 320) of the at least two roller tracks (29, 29') have different run lengths, and that the running surfaces (21, 22; 21', 22', 210, 220; 310, 320) of the at least two roller tracks (29, 29') at least sectionally differ by different transverse dimensions along the running direction.

2. Chain link (2, 2', 2") according to any of the preceding claims, **characterized in that** the running surface (21, 22; 21', 22'; 210, 220, 310, 320) of at least one roller track extends from the outermost front end in running direction to the outermost rear end of the chain link (2, 2', 2").

3. Chain link (2, 2', 2") according to any of the preceding claims, **characterized in that** at its front and rear end as seen in running direction the chain link (2, 2', 2") comprises one or more connecting means for the articulated, in particular releasable connection with another chain link (2, 2', 2").

4. Chain link (2, 2', 2") according to any of the preceding claims, **characterized in that** one or more running surfaces (21, 22; 21', 22'; 210, 220, 310, 320) are quadrangle-shaped, in particular rectangular or square-shaped, wherein the at least two running surfaces (21, 22; 21', 22'; 210, 220, 310, 320) differ in the length of the long side.

5. Chain link (2, 2', 2") according to any of claims 1 to 4, **characterized in that** the running surfaces (210, 220) of the at least two roller tracks (29, 29') form a T-shape whose crossbars extend in running direction and whose longitudinal bars extend in a common direction transversely to the running direction.

6. Chain link (2, 2', 2") according to any of claims 1 to 4, **characterized in that** at least one running surface (320) of the at least two roller tracks (29, 29') forms an H-shape and at least one running surface (310) forms a cross shape.

7. Chain link (2, 2', 2") for a crawler chain (6), wherein the chain link (2, 2', 2") comprises at least two roller tracks (29, 29') extending in parallel, on whose running surfaces (21, 22; 21', 22'; 210, 220, 310, 320) at least one track roller (3) is movable during operation of the crawler,
**characterized in that**
the running surfaces (21, 22; 21', 22'; 210, 220, 310, 320) differ from each other in terms of their width at their front and/or rear end as seen in longitudinal direction.

8. Chain link (2, 2', 2") according to claim 7, **characterized in that** the running surfaces are formed fork-shaped and are aligned to each other point-symmetrically.

9. Chain (6) for a crawler drive consisting of at least two chain links (2, 2', 2") according to any of the preceding claims.

10. Chain (6) according to claim 9, **characterized in that** the chain links (2, 2', 2") are identical at least for the most part and adjacent chain links (2, 2', 2") are mounted in a manner rotated to each other by 180° about an axis vertical to the running direction.

11. Working machine, in particular earth-moving machine or crawler crane, with at least two crawler drives which are equipped with chain links (2, 2', 2") according to any of claims 1 to 9.

## Revendications

1. Maillon de chaîne (2, 2', 2") pour une chenille (6), dans lequel le maillon de chaîne (2) comprend au moins deux voies de galet (29, 29') s'étendant de manière parallèle, sur les surfaces de roulement (21, 22 ; 21', 22' ; 210, 220 ; 310, 320) desquelles au moins un galet de roulement (3) peut être déplacé pendant le fonctionnement de la chenille,
les surfaces de roulement (21, 22 ; 21', 22'; 210, 220 ; 310, 320) des au moins deux voies de galet (29, 29') étant asymétriques, **caractérisé en ce que** les surfaces de roulement (21, 22 ; 21', 22' ; 210, 220 ; 310, 320) des au moins deux voies de galet (29, 29') présentent des longueurs de roulement différentes, et que les surfaces de roulement (21, 22 ; 21', 22' ; 210, 220 ; 310, 320) des au moins deux voies de roulement (29, 29') se distinguent le long du sens de roulement au moins par sections par des dimensions transversales différentes.

2. Maillon de chaîne (2, 2', 2") selon l'une quelconque des revendications précédentes, **caractérisé en ce que** la surface de roulement (21, 22 ; 21', 22' ; 210, 220 ; 310, 320) d'au moins une voie de galet s'étend depuis l'extrémité le plus à l'extérieur avant dans le sens de roulement jusqu'à l'extrémité le plus à l'extérieur arrière du maillon de chaîne (2, 2', 2").

3. Maillon de chaîne (2, 2', 2") selon l'une quelconque des revendications précédentes, **caractérisé en ce que** le maillon de chaîne (2, 2', 2") comprend au niveau de son extrémité avant et arrière vue dans le sens de roulement un ou plusieurs moyens de liaison destinés à être reliés de manière articulée, en particulier de manière amovible, à un autre maillon de chaîne (2, 2', 2").

4. Maillon de chaîne (2, 2', 2") selon l'une quelconque des revendications précédentes, **caractérisé en ce qu'**une ou plusieurs surfaces de roulement (21, 22 ; 21', 22' ; 210, 220 ; 310, 320) sont de forme quadrangulaire, en particulier de forme rectangulaire ou carrée, dans lequel les au moins deux surfaces de roulement (21, 22 ; 21', 22' ; 210, 220 ; 310, 320) se distinguent dans la longueur du côté longitudinal.

5. Maillon de chaîne (2, 2', 2") selon l'une quelconque des revendications 1 à 4, **caractérisé en ce que** les surfaces de roulement (210, 220) des au moins deux voies de galet (29, 29') forment une forme en T, dont la barre transversale s'étend dans le sens de roulement et dont la barre longitudinale s'étend dans un sens commun de manière transversale au sens de roulement.

6. Maillon de chaîne (2, 2', 2") selon l'une quelconque des revendications 1 à 4, **caractérisé en ce qu'**au moins une surface de roulement (320) des au moins deux voies de galet (29, 29') forme une forme en H et au moins une surface de roulement (310) forme une forme de croix.

7. Maillon de chaîne (2, 2', 2") pour une chenille (6), dans lequel le maillon de chaîne (2, 2', 2") comprend au moins deux voies de galet (29, 29') s'étendant de manière parallèle, sur les surfaces de roulement (21, 22 ; 21', 22' ; 210, 220 ; 310, 320) desquelles au moins un galet de roulement (3) peut être déplacé pendant le fonctionnement de la chenille,
**caractérisé en ce**
**que** les surfaces de roulement (21, 22 ; 21', 22' ; 210, 220 ; 310, 320) se distinguent les unes des autres eu égard à leur largeur au niveau de leur extrémité avant et/ou arrière vue dans le sens longitudinal.

8. Maillon de chaîne (2, 2', 2") selon la revendication 7, **caractérisé en ce que** les surfaces de roulement sont réalisées à la manière d'une fourche et sont orientées les unes par rapport aux autres de manière symétrique par rapport à un point.

9. Chaîne (6) pour un entraînement à chenille consistant en au moins deux maillons de chaîne (2, 2', 2") selon l'une quelconque des revendications précédentes.

10. Chaîne (6) selon la revendication 9, **caractérisée en ce que** les maillons de chaîne (2, 2', 2") sont au moins en grande partie identique et des maillons de chaîne (2, 2', 2") adjacents sont montés les uns par rapport aux autres de manière tournée de 180° autour d'un axe vertical par rapport au sens de roulement.

11. Engin de travail, en particulier engin de terrassement ou grue sur chenilles, avec au moins deux entraînements à chenille, qui sont équipés de maillons de chaîne (2, 2', 2") selon l'une quelconque des revendications 1 à 9.
